# EUROPEAN PATENT SPECIFICATION

(11) **EP 2 021 738 B1**
(45) Date of publication and mention of the grant of the patent: **28.11.2012**
(21) Application number: 07725201.3
(22) Date of filing: 14.05.2007
(51) Int. Cl.: G01D 5/14

(54) **LINEAR MAGNETIC POSITION SENSOR WITH IMPROVED LINEARITY OF THE OUTPUT CHARACTERISTIC CURVE**
LINEAR-MAGNETPOSITIONSSENSOR MIT VERBESSERTER LINEARITÄT DER CHARAKTERISTISCHEN AUSGANGSKURVE
DÉTECTEUR DE POSITION MAGNÉTIQUE LINÉAIRE AVEC COURBE CARACTÉRISTIQUE DE SORTIE A LINEARITE AMELIOREE

(30) Priority: 31.05.2006 DE 102006025429
(43) Date of publication of application: 11.02.2009
(73) Proprietor: Tyco Electronics AMP GmbH, 64625 Bensheim (DE)
(72) Inventor: WOLF, Marco, 76879 Hochstadt (DE)
(74) Representative: Grünecker, Kinkeldey, Stockmair & Schwanhäusser
(86) International application number: PCT/EP2007/004282
(87) International publication number: WO 2007/137694

(56) References cited:
- FR-A1- 2 790 549
- FR-A1- 2 829 573
- FR-A1- 2 877 431

## Description

The present invention relates to a non-contact position sensor, in particular to a linear magnetic position sensor with a field probe to create a sensor signal in response to a geometric position of a magnetic indicator element in relation to this field probe. Furthermore, the present invention relates to a vacuum actuator with a flexible membrane, which is arranged between two pressure reservoirs and the position of which is monitored by a non-contact position sensor.

Non-contact magnetic position sensors, in particular those for the detection of a linear movement, are being used increasingly, especially in automotive engineering. The basic principle of this is to measure, with the aid of a magnetic field probe, for example, a Hall element, the change in the magnetic field, which occurs when a movable magnetic indicator element changes its geometric position in relation to the field probe. The indicator element is connected to the object, whose change in position is to be detected and the field probe supplies an electrical output signal, which can be easily processed.

So-called vacuum actuators are being used these days in automotive engineering, particularly in connection with the operation of fan shutters, brakes or various valves. Such a vacuum actuator works on the principle that a flexible membrane separates two pressure reservoirs from each other and through a reduction of the pressure on one side in relation to the pressure on the other side the membrane is deflected in the direction of the lower pressure. Closed loop monitoring takes place via the measurement by a non-contact position sensor of the actual deflection of the membrane.

There is, however, the problem in connection with conventional linear magnetic position sensors having the known arrangements that on the one hand the linearity of the output characteristic curve, i.e. the output signal caused by the change in position depending on the relative change in position from a zero position, is too low. Arrangements whose electrical output signal have an improved linearity have the disadvantage on the other hand, that they are very costly to produce and are not robust and stable enough when in operation, particularly when used in motor vehicles.

As a result, there is the need for a simply and robustly constructed linear magnetic position sensor, which has an improved linearity in its output characteristic curve.

This object is achieved by the subject-matter of the independent claims. The dependent claims relate to advantageous improvements of the present invention.

The documents FR-A1-2 877 431 FR-A1-2 829 573 , and FR-A1-2 790 549 disclose linear magnetic position sensors according to the prior art.

The present invention is based on the idea of using a substantially tubular permanent magnet, which is movable in a direction along a longitudinal axis of the tube, as an indicator element, in the case of a linear magnetic position sensor with a field probe to create a sensor signal in response to a geometric position of a movable magnetic indicator element. At least two ferromagnetic flux carrying members are arranged along the longitudinal axis inside the tubular permanent magnet and define an air gap, in which the field probe is arranged.

By using a movable tubular permanent magnet as an indicator element, the manufacture and assembly of the position sensor according to the invention is particularly simple. Furthermore, the arrangement according to the invention is insensitive to the radial tolerance, tipping over or wobbling of the magnet. The arrangement of the field probe in an air gap between two ferromagnetic flux carrying members inside the tubular movable permanent magnet makes a very extensive linear dependence between the created and measurable magnetic field and the deflection of the indicator element possible.

The systems inherent linearity makes it possible to dispense with the costly linearisation processes inherent to signal processing, thus increasing the accuracy of a position sensor of this type and further reducing the production costs thereof.

According to an advantageous embodiment, the indicator element has the form of a hollow cylinder. This represents a simple form in terms of production and makes a rotationally symmetrical magnetic field possible, which depends as little as possible on tolerance fluctuations.

If the indicator element is magnetised in a direction transverse to the longitudinal axis and therefore transverse to the direction of movement, then a linear change of flux density in the field probe in the event of an axial movement direction of the magnet can be achieved in an advantageous manner in conjunction with the guiding of the magnetic flux through the flux carrying member. In this case it is insignificant which pole direction is selected.

The exterior profile of the flux carrying members and the inner profile of the indicator element should correspond to each other in their cross sections for optimal guiding of the magnetic field lines in the overall arrangement. In the case of a hollow cylindrical permanent magnet, the flux carrying members thus have a cylindrical shape and are arranged concentrically inside the permanent magnet. Any other shaped cross sections can, of course, be used as well, however.

Depending on the application, the zero position of the permanent magnet in relation to the field probe can be selected within a wide range. In order to achieve the greatest possible sensitivity in two directions of deflection, the position of the field probe is fixed in an advantageous manner in the centre of the overall length of the tubular permanent magnet.

Optimal guiding of the magnetic field is achieved by the longitudinal dimensions of the movable permanent magnet and of the flux carrying members surrounding the field probe being selected so that the whole path length of the two flux carrying members is longer than the length of the permanent magnet.

According to an advantageous embodiment of the present invention the field probe is a Hall element. The use of a Hall element offers the advantage that Hall elements respond very sensitively to changes in magnetic flux and therefore even small movements of the indicator element can be detected. The characteristic curve of the actual Hall sensor, i.e. the dependence of the electrical output signal on the change in the B field occurring, can be adapted very easily by adapting the electrical Hall sensor wiring or by programming the evaluation electronics to the given requirements.

Any known Hall elements based on indium antimonide, indium arsenide or gallium arsenide can be used as a field probe in the arrangement according to the invention. A Hall sensor based on indium arsenide is advantageous due to its low temperature coefficient and its low resistance. So-called transverse sensors can be used, for example, in which a Hall wafer is arranged in a flat cuboid-shaped housing so that a B field is measured perpendicular to the two large housing surfaces. The arrangement according to the invention can, however, also be applied to other shapes and materials.

Hall elements based on silicon thus offer the advantage that they are very economical to produce and enable simple integration of the evaluation electronics due to their compatibility with the standard production processes of semiconductor technology, such as CMOS processes ("intelligent" sensor).

The advantageous properties of the linear magnetic position sensor according to the invention become noticeable particularly when the position sensor is used in a vacuum actuator and the indicator element is connected to a flexible membrane, the geometric position of which adjusts itself according to a difference in pressure between two pressure reservoirs.

The invention is described in more detail with reference to the embodiments shown in the accompanying drawings. Similar or corresponding details are provided with the same reference numerals in the drawings, in which:
Fig. 1 is a sectioned perspective view of a linear magnetic position sensor according to a first embodiment and a graph of the change in the B field occurring as a function of the deflection of the indicator element;
Fig. 2 is a plan view of the linear magnetic position sensor according to the invention;
Fig.3 is a sectioned perspective view of a linear magnetic position sensor according to the first embodiment along the line 3-3 of Figure 2;
Fig. 4 is a plan view of a hollow cylindrical permanent magnet indicator element with a first magnetic polarisation;
Fig. 5 is a plan view of a hollow cylindrical permanent magnet indicator element with a second magnetic polarisation;
Fig. 6 is a sectioned perspective view of linear magnetic position sensor according to a second advantageous embodiment showing the B field and a graph of the change in B field as a function of the deflection of the indicator element.

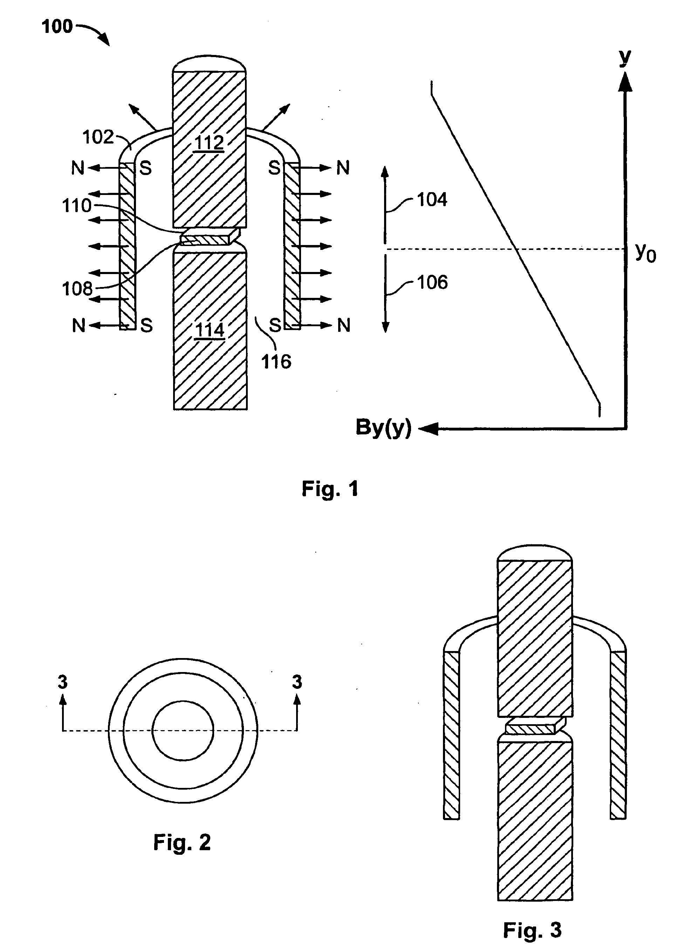

Fig. 1 shows a position sensor 100 according to the invention in a sectioned perspective view, together with a view of the B field created in y-direction as a function of the deflection y to be measured. The position sensor 100 comprises an indicator element 102 such as a hollow cylindrical permanent magnet. The indicator element 102 is radially magnetised, as indicated schematically, and is mounted to as to be linearly movable about a zero position y₀, as indicated by the deflection arrows 104, 106. A field probe 108 such as a Hall element is provided to detect the changes in magnetic field that occur.

The field probe 108 is located in an air gap 110, which is defined between two flux carrying members 112, 114. The flux carrying members 112, 114 are manufactured from a ferromagnetic material and have the form of cylinders. They are arranged centrally in a radial direction in the indicator element 102, as can be seen in the view in Figure 2, which follows, and define another air gap 116 between their jacket surfaces and the interior walls of the indicator element 102. In the zero position y₀ shown in Figure 1, the indicator element 102 is located in such a position that its axial centre coincides with the field probe 108 and the flux carrying member 112 and the flux carrying member 114 both project outwards the same distance from the indicator element 102.

If the indicator element 102 is now deflected from the zero position y₀ in direction 104 or direction 106, then a change in the magnetic field occurs in the y-direction, which can be detected by the field probe 108. As can be seen in Fig. 1, the change in the y component of the magnetic field depends exactly linearly on the deflection of the indicator element 102 from its zero position y₀ in a comparatively wide region.

Additional complex linearisation measures can therefore be dispensed with when using the solution according to the invention. Furthermore, it can be shown that the linearity of the change in the B field shown here remains intact even if the indicator element tips over. The position sensor 100 according to the invention is therefore advantageously neither dependent on tolerances and fluctuations in position, nor on the wobbling movement of the indicator element 102 caused by the system when used in vacuum actuators.

The linearisation of the characteristic curve which occurs is determined solely by the geometric arrangement of the flux carrying members 112, 114, which are fixed in their positions. The position sensor 100 is therefore insensitive to radial tolerances, tipping over or wobbling of the magnet 102.

The exact arrangement of the flux carrying members 112, 114 inside the hollow cylindrical indicator element 102, which can also be described as annular, is sketched again in Figures 2 and 3. In the zero position y₀ the movable indicator element 102 and the field probe 108 are aligned so that the field probe 108 is located in the centre of the indicator element 102, both radially and in an axial direction.

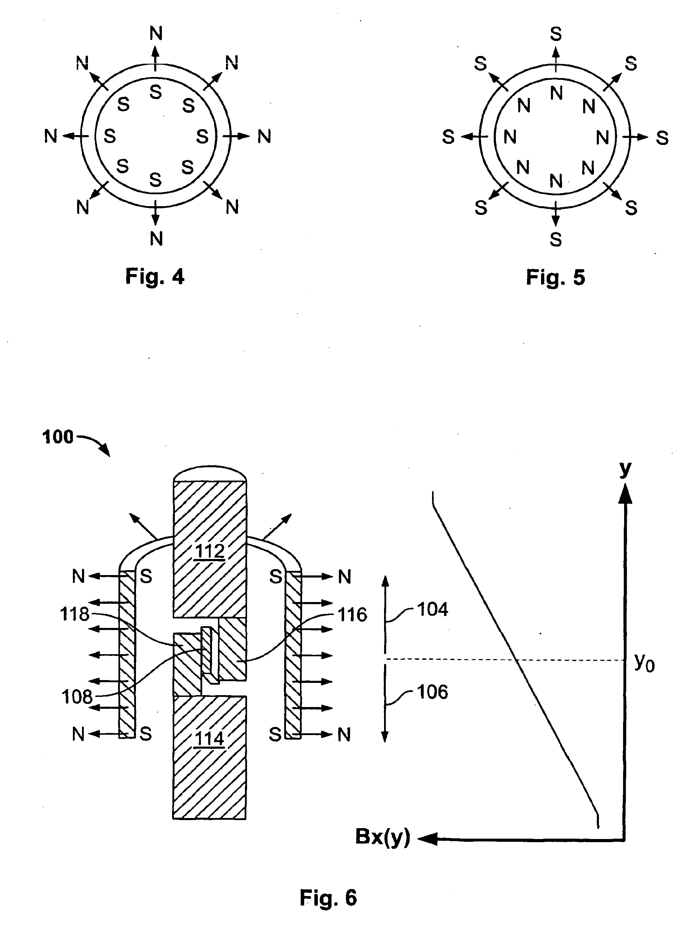

In Figures 4 and 5 it is schematically indicated that the radial magnetisation of the indicator element 102 can have both polarities. The linearity of the change in magnetic field according to the invention is not dependent on the polarity of the magnet.

Another embodiment of the position sensor according to the invention is shown in Figure 6. Here a field probe 108 is arranged as the field probe so that the magnetic field can be detected transverse to the longitudinal axis of the indicator element 102. Each of the two flux carrying members 112, 114 has a cantilever arm, 116, 118 for this purpose. The two cantilever arms 116, 118, which can also be described as abutments, are arranged in an overlapping manner so that they direct the magnetic field Bₓ(y) in a direction transverse to the longitudinal axis of the indicator element 102 to the field probe 108. In this arrangement a very extensive linearity of the output characteristic curve, i.e. the measurable B field can be determined as a function of the deflection from the zero position y₀.

Although mainly so-called transverse Hall elements used for the field probes 108 have been assumed in the foregoing description, all known forms and sizes of Hall sensors can of course be used as suitable field probes, including, for example, axially arranged Hall sensors.

## Claims

1. Linear magnetic position sensor with a field probe (108) to create a sensors signal in response to a geometric position of a magnetic indicator element (102) in rotation to the field probe (108),
wherein the indicator element (102) is movable in a direction (104, 106) along its longitudinal axis, and
wherein the position sensor has at least two ferromagnetic flux carrying members (112, 114) defining an air gap (110), in which the field probe (108) is arranged,
**characterized in**
**that** the indicator element (102) is formed by a substantially tubular permanent magnet being magnetized in a direction transverse to the longitudinal axis, and that the flux carrying members (112, 114) are arranged inside the tubular permanent magnet (102), so that the indicator element in its zero position (y₀) surrounds the field probe (108), both radially and in axial direction.

2. Position sensor according to claim 1, wherein the indicator element (102) has the shape of a hollow cylinder.

3. Position sensor according to at least one of the preceding claims, wherein an exterior profile of a cross section of the flux carrying members (112, 114) matches an interior profile of a cross section of the indicator element (102).

4. Position sensor according to at least one of the preceding claims, wherein the flux carrying members (112, 114) have a cylindrical shape.

5. Position sensor according to at least one of the preceding claims, wherein the extension of the flux carrying members (112, 114) along the longitudinal axis is greater than a length of the indicator element (102).

6. Position sensor according to at least one of the preceding claims, wherein the zero position (y0) of the indicator element (102) is defined so that the field probe (108) is located in the centre of the indicator element both radially and in an axial direction.

7. Position sensor according to at least one of the preceding claims, wherein the field probe (108) is formed by a Hall element.

8. Position sensor according to claim 7, wherein the air gap (110) runs transverse to the longitudinal axis and the Hall element (108) is arranged in the air gap so that it detects a magnetic field, the field lines of which run along the longitudinal axis.

9. Position sensor according to claim 7, wherein the air gap (110) runs at least partially along the longitudinal axis and the Hall element is arranged in the air gap, so that it detects a magnetic field, the field lines of which run transverse to the longitudinal axis.

10. Vacuum actuator with a flexible membrane, which is arranged between two pressure reservoirs and the geometric position of which adjusts itself as a function of a pressure difference between the two pressure reservoirs, a position sensor (100) according to at least one of claims 1 to 9 detecting the geometric position of the membrane.

## Patentansprüche

1. Linearer magnetischer Positionssensor mit einer Feldsonde (108) zum Erzeugen eines Sensorsignals in Erwiderung auf eine geometrische Position eines magnetischen Indikatorelementes (102) im Bezug auf die Feldsonde (108),
wobei das Indikatorelement (102) in einer Richtung (104, 106) entlang seiner Längsachse beweglich ist und
der Positionssensor wenigstens zwei ferromagnetische Flussleitelemente (112, 114) hat, die einen Luftspalt (110) begrenzen, in dem sich die Feldsonde (108) befindet,
**dadurch gekennzeichnet, dass**
das Indikatorelement (102) aus einem im wesentlichen röhrenförmigen Dauermagneten ausgebildet ist, der in einer Richtung quer zu der Längsachse magnetisiert ist, und dass die Flussleitelemente (112, 114) innerhalb des röhrenförmigen Dauermagneten (102) derart angeordnet sind, dass das Indikatorelement in seiner Nullposition (y₀) die Feldsonde sowohl in radialer als auch in axialer Richtung umgibt.

2. Positionssensor nach Anspruch 1, bei dem das Indikatorelement (102) die Gestalt eines hohlen Zylinders hat.

3. Positionssensor nach wenigstens einem der vorhergehenden Ansprüche, bei dem ein Außenprofil eines Querschnittes der Flussleitelemente (112, 114) zu einem Innenprofil eines Querschnittes des Indikatorelementes (102) passt.

4. Positionssensor nach wenigstens einem der vorhergehenden Ansprüche, bei dem die Flussleitelemente (112, 114) eine zylindrische Form haben.

5. Positionssensor nach wenigstens einem der vorhergehenden Ansprüche, bei dem die Ausdehnung der Flussleitelemente (112, 114) entlang der Längsachse größer als eine Länge des Indikatorelementes (102) ist.

6. Positionssensor nach wenigstens einem der vorhergehenden Ansprüche, bei dem die Nullposition (y₀) des Indikatorelementes (102) derart definiert ist, dass sich die Feldsonde (108) im Zentrum des Indikatorelementes sowohl in radialer als auch in axialer Richtung befindet.

7. Positionssensor nach wenigstens einem der vorhergehenden Ansprüche, bei dem die Feldsonde (108) aus einem Hall-Element besteht.

8. Positionssensor nach Anspruch 7, bei dem der Luftspalt (110) quer zu der Längsachse verläuft und das Hall-Element (108) in dem Luftspalt derart angeordnet ist, dass es ein Magnetfeld erfasst, dessen Feldlinien entlang der Längsachse verlaufen.

9. Positionssensor nach Anspruch 7, bei dem der Luftspalt (110) wenigstens teilweise entlang der Längsachse verläuft und das Hall-Element in dem Luftspalt derart angeordnet ist, dass es ein Magnetfeld erfasst, dessen Feldlinien quer zu der Längsachse verlaufen.

10. Vakuumstellglied mit einer flexiblen Membran, die zwischen zwei Druckbehältern angeordnet ist und deren geometrische Position sich als eine Funktion eines Druckunterschiedes zwischen den beiden Druckbehältern selbst justiert, wobei ein Positionssensor (100) nach wenigstens einem der Ansprüche 1 bis 9 die geometrische Position der Membran erfasst.

## Revendications

1. Détecteur de position magnétique linéaire avec une sonde de champ (108) pour créer un signal de détecteur en réponse à une position géométrique d'un élément indicateur magnétique (102) en relation avec la sonde de champ (108) ;
- dans lequel l'élément indicateur (102) est mobile dans une direction (104, 106) le long de son axe longitudinal ; et
- dans lequel le détecteur de position comporte au moins deux éléments ferromagnétiques porteurs de flux (112, 114) définissant un entrefer (110), dans lequel la sonde de champ est agencée ;
**caractérisé :**
- **en ce que** l'élément indicateur (102) est formé par un aimant permanent sensiblement tubulaire magnétisé dans une direction transversale à l'axe longitudinal, et en ce que les éléments porteurs de flux (112, 114) sont agencés à l'intérieur de l'aimant permanent tubulaire (102), de sorte que l'élément indicateur dans sa position zéro (y₀) entoure la sonde de champ (108), à la fois radialement et dans une direction axiale.

2. Détecteur de position selon la revendication 1, dans lequel l'élément indicateur (102) a la forme d'un cylindre creux.

3. Détecteur de position selon au moins une des revendications précédentes, dans lequel un profil extérieur d'une coupe transversale des éléments porteurs de flux (112, 114) correspond à un profil intérieur d'une coupe transversale de l'élément indicateur (102).

4. Détecteur de position selon au moins une des revendications précédentes, dans lequel les éléments porteurs de flux (112, 114) ont une forme cylindrique.

5. Détecteur de position selon au moins une des revendications précédentes, dans lequel l'étendue des éléments porteurs de flux (112, 114) suivant l'axe longitudinal est supérieure à une longueur de l'élément indicateur (102).

6. Détecteur de position selon au moins une des revendications précédentes, dans lequel la position zéro (y₀) de l'élément indicateur (102) est définie de telle sorte que la sonde de champ (108) soit située au centre de l'élément indicateur à la fois radialement et dans une direction axiale.

7. Détecteur de position selon au moins une des revendications précédentes, dans lequel la sonde de champ (108) est formée par un élément à effet Hall.

8. Détecteur de position selon la revendication 7, dans lequel l'entrefer (110) s'étend transversalement à l'axe longitudinal et l'élément à effet Hall (108) est agencé dans l'entrefer de sorte qu'il détecte un champ magnétique, dont les lignes de champ s'étendent le long de l'axe longitudinal.

9. Détecteur de position selon la revendication 7, dans lequel l'entrefer (110) s'étend au moins partiellement suivant l'axe longitudinal et l'élément à effet Hall est agencé dans l'entrefer de sorte qu'il détecte un champ magnétique, dont les lignes de champ s'étendent transversalement à l'axe longitudinal.

10. Actionneur à dépression avec une membrane flexible, qui est agencée entre deux réservoirs de pression et dont la position géométrique s'ajuste elle-même en fonction d'une différence de pression entre les deux réservoirs de pression, un détecteur de position (100) selon au moins une des revendications 1 à 9 détectant la position géométrique de la membrane.
